# EUROPÄISCHE PATENTSCHRIFT

(11) **EP 1 157 837 B1**
(45) Veröffentlichungstag und Bekanntmachung des Hinweises auf die Patenterteilung: **24.06.2009**
(21) Anmeldenummer: 01110797.6
(22) Anmeldetag: 04.05.2001
(51) Int. Cl.: B41F 33/00, B41F 27/00, B41C 1/10, H04N 1/50

(54) **Verfahren zur Registereinstellung an einer Mehrfarbendruckmaschine**
Method for registration in a multi-colour printing press
Procédé pour la mise en repérage dans une presse multicolor

(30) Priorität: 17.05.2000 US 204883 P
(43) Veröffentlichungstag der Anmeldung: 28.11.2001
(73) Patentinhaber: Eastman Kodak Company, Rochester NY 14650-2201 (US)
(72) Erfinder: Hunold, Heiko, 24582 Wattenbek (DE); Metzler, Patrick, Dr., 66606 St. Wendel (DE)
(74) Vertreter: Weber, Etienne Nicolas

(56) Entgegenhaltungen:
- EP-A- 0 610 889
- EP-A- 0 770 480
- DE-C- 247 147
- US-A- 4 546 700
- US-A- 4 719 575
- US-A- 5 076 163

## Beschreibung

Die Erfindung betrifft ein Verfahren zur Registereinstellung an einer Mehrfarbendruckmaschine mit verschiedenen Druckfarben zugeordneten Farbdruckwerken, mindestens einem Bildzylinder, Bilderzeugungseinrichtungen zur Erzeugung von Teilfarbenbildern, insbesondere von elektrostatischen latenten Teilfarbenbildern, auf dem mindestens einen Bildzylinder, einem Träger für Drucksubstrate und mindestens einer Bildübertragungsstelle für die Übertragung der Teilfarbenbilder auf die Drucksubstrate, wobei eine Zuordnung der Bilderzeugungsstellen auf dem mindestens einen Bildzylinder zur Erzielung einer Registerübereinstimmung der Teilfarbenbilder beim Druck vorgenommen wird, indem sowohl die Erzeugung der Bildanfänge als auch die Erzeugung von Bereichen der Teilfarbenbilder auf der Grundlage des Drucks und der Auswertung von Registermarken eingestellt wird.

Weiterhin wird eine Vorrichtung beschrieben nach dem oben genannten Verfahren zur Registereinstellung an einer Mehrfarbendruckmaschine mit verschiedenen Druckfarben zugeordneten Farbdruckwerken, mindestens einem Bildzylinder, Bilderzeugungseinrichtungen zur Erzeugung von Teilfarbenbildern, insbesondere von elektrostatischen latenten Teilfarbenbildern auf dem mindestens einen Bildzylinder, einem Träger für Drucksubstrate und mindestens einer Bildübertragungsstelle für die Übertragung der Teilfarbenbilder auf Drucksubstrate, Sensoren für Positionserfassungen sowie mindestens einer Einstellungseinrichtung zur Zuordnung der Positionen der Bilderzeugungsstellen auf dem mindestens einen Bildzylinder zur Erzielung einer Registerübereinstimmung der Teilfarbenbilder beim Druck, wobei mindestens ein Registersensor zur Erfassung von Registermarken angeordnet und die Einstellungseinrichtung derart ausgebildet ist, dass sie den Druck von Registermarken veranlasst und derart auswertet, dass sie auf dieser Grundlage die Erzeugung der Bildanfänge als auch die Erzeugung von Bereichen der Teilfarbenbilder einstellt.

Der Druck farbiger Darstellungen, insbesondere farbiger Bilder, erfolgt dadurch, dass mehrere Teilfarbenbilder übereinandergedruckt werden. Dies sind in der Regel die Farben Gelb, Magenta und Zyan sowie Schwarz. Bei Bedarf kommen noch Sonderfarben hinzu. Durch das Übereinanderdrucken dieser Farben lassen sich alle Farbkompositionen erzielen. Die Qualität der Drucke hängt dabei wesentlich von dem registerhaltigen Übereinanderdrucken der Teilfarbenbilder ab. In herkömmlichen Druckverfahren werden die Druckformen mittels Probedrucken und mit diesen mitgedruckten Registermarken so lange korrigiert, bis ein exaktes Übereinanderdrucken, also eine Registerhaltigkeit des Drucks, erzielt ist.

Bei digitalen Druckverfahren werden die Bildzylinder mittels jeweils einer Bilderzeugungseinrichtung mit Bildpunkten beschrieben, indem beispielsweise elektrostatische Aufladungen erzeugt und diese mit anhaftenden Farbpigmenten versehen werden. Danach werden die Farbpigmente auf ein Drucksubstrat übertragen. Bei digitalen Druckverfahren kann die Registerhaltigkeit dadurch erzielt werden, dass die Bilderzeugungseinrichtungen entsprechend gesteuert werden. Da die Bebilderung für jeden Druck neu erfolgt, muss nicht wie bei herkömmlichen Druckverfahren eine einmalige Einstellung vorgenommen werden, sondern es kann eine Voreinstellung und eine Regelung vorgesehen sein, die für jeden einzelnen Druck Korrekturen vornimmt. Selbstverständlich gilt dies nicht nur für die Aufbringung elektrostatischer latenter Bilder sondern auch alle für anderen Druckverfahren, bei denen mittels einer digitalen Steuerung Bildpunkte aufgebracht werden.

Die Patentanmeldung EP-A-0770480 offenbart, als Stand der Technik, eine digitale Druckmaschine mit mehreren Druckwerken und mit einer automatischen Registerregelung. Das Dokument US-A- 4719575 beschreibt ein Verfahren zum Einhalten der Register in einer bahnfördernden Maschine mit Querschneidevorrichtung.

Für ein elektrostatisches Druckverfahren der eingangs genannten Art wurde daher von der US 5, 287, 162 vorgeschlagen, Registermarken vorzugsweise auf den Träger für die Drucksubstrate zu drucken und diese durch eine Vorrichtung zu erfassen. Ermittelt werden dabei die Zeiten, die die Registermarken von der Erzeugung durch die Bilderzeugungseinrichtungen bis zu einer Erfassungsstelle brauchen. Diese Zeiten werden dann herangezogen, um die Zeitpunkte zu bestimmen, zu denen die Bilderzeugungseinrichtungen an den einzelnen Bildzylindern deren Bebilderung beginnen, um die Registerhaltigkeit nach Übertragung der Bilder auf ein Drucksubstrat zu erzielen. Fehler, die sich zeitlich wiederholend durch Geschwindigkeitsschwankungen der Bildzylinder, fehlerhafte Positionsbestimmungen durch die Drehwinkelgeber der Bildzylinder oder sonstige Ursachen entstehen können, werden mittels Eichtabellen erfasst. Auf der Grundlage dieser Eichtabellen wird eine Kompensation der Fehler vorgenommen. Vorgesehen ist entweder eine von den Positionen der Bildzylinder abhängige Regulierung der Bildzylindergeschwindigkeiten oder eine entsprechende Erzeugung der Bildzeilen.

Bei der oben genannten Schrift ist zwar erwähnt, dass der Start der Daten, also des Beginns der Bebilderung, und dann der Start jeder Bildzeile gesteuert werden, es fehlt jedoch die Lösung des Problems der Gewinnung von Daten für die Bildanfänge und Bildzeilen oder sonstiger Teilbereiche eines Teilfarbenbildes derart, dass mit vertretbarem Aufwand eine schnelle Korrektur hoher Qualität erzielbar ist.

Der Erfindung liegt daher die Aufgabe zugrunde, ein Verfahren der eingangs genannten Art derart weiterzubilden, dass die Registereinstellung mit vertretbarem Rechenaufwand und hoher Genauigkeit realisierbar ist und die Daten mit vertretbarem Rechenaufwand gewonnen und verarbeitet werden können.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben/angegeben.

Es wird vorgesehen daß mindestens eine Bildseite mit Registermarken gedruckt wird, die eine andere Länge aufweist als die Drucke, deren Register eingestellt werden soll, und dass zur Ermittlung der Korrekturwerte die Daten der Registermarken der mindestens einen Bildseite erfasst, zu Positionen von bild- und substrattragenden Elementen in Bezug gesetzt und die Bilderzeugungseinrichtungen entsprechend der Korrekturwerte gesteuert werden.

Die Erfindung hat den Vorteil, daß durch sie ein Verfahren bereitgestellt wird, durch welches mit vertretbarem Rechenaufwand innerhalb kurzer Zeit die Korrekturwerte aus den Ist- und Sollwerten ermittelt und die Korrekturen durchgeführt werden können. Der Grundgedanke der Erfindung besteht in der Trennbarkeit der Istwerte der Bildanfänge von den Istwerten der Bereiche der Teilfarbenbilder durch die vorgeschlagene Ausgestaltung von Registermarken. Diese Trennung kann als Zwischenschritt, beispielsweise zur rechnerischen Ermittlung der Korrekturwerte für die Bilderzeugungen erfolgen oder es können getrennte Korrekturwerte ermittelt und berücksichtigt werden.

Für die erwähnte Trennbarkeit wird vorgeschlagen, daß mindestens ein Probedruck vorgenommen wird, bei dem eine Bildseite mit Registermarken gedruckt wird, die länger ist als die Drucke, deren Register eingestellt werden sollen oder wenn mehrere Bildseiten erstellt werden, daß diese kürzer sind als die Drucke, deren Register eingestellt werden sollen. Derartige Längenabweichungen ermöglichen es, die Fehler der Bildanfänge, welche durch einen Zuordnungsfehler der Bilderzeugungen zueinander bedingt sind, von den Fehlern der Bildbereiche zu trennen, welche von Übertragungsfehlern der erzeugten Teilfarbenbilder von der Bilderzeugung bis zu ihrer Übertragung auf ein Drucksubstrat herrühren. Diese unterschiedlichen Ursachen der Fehler ermöglicht deren Trennung, da sich durch die von den zu erstellenden Drucken unterschiedlich langen Bildseiten mit Registermarken die Verknüpfung der Fehler der Bildanfänge mit den Fehlern der Bereiche der Teilfarbenbilder eliminieren läßt. Diese Trennung ist zumindest innerhalb der Berechnung von Korrekturwerten erforderlich, um eine Registereinstellung mit vertretbarem Rechenaufwand und hoher Genauigkeit zu realisieren. Die zumindest als Rechenzwischenschritt vorzunehmende Trennung ist aufgrund der unterschiedlichen Charakteristiken der Fehler möglich, da der Fehler der Bereiche der Teilfarbenbilder als eine im wesentlichen periodische Kurve auftritt und der Fehler der Bildanfänge als Achsabschnitt ungleich Null (Offset) dieser Kurve erfaßbar ist.

Die Schwierigkeit dieser Erfassung besteht jedoch darin, daß auch der mittlere Wert der Kurve in der Realität keinen geraden Verlauf hat. Auf diese Weise kann die erfaßte Kurve eine Überlagerung zweier Kurven sein, die zur Erfassung der Fehler der Bildanfänge und der Fehler der Bereiche der Teilfarbenbilder voneinander getrennt werden müssen. Dies kann beispielsweise durch einen Rechner erfolgen, der die Charakteristiken aufgrund eines Algorithmus erkennt. Möglich ist diese Trennung durch die unterschiedliche Länge der Bildseite oder Bildseiten zu den zu erstellenden Drucken, weil die Berechnung dadurch mit weniger Unbekannten möglich und einfacher vornehmbar ist.

Ein weiteres Problem besteht darin, daß einerseits der Kurvenverlauf derart aufgrund punktueller Messungen rekonstruierbar sein muß, daß die oben beschriebene Analyse der Kurve möglich ist, andererseits darf keine Trift die Kurvenanalyse verfälschen. Der Druck von Bildseiten mit Registermarken muß daher die Bedingung erfüllen, daß mittels der Registermarken genügend Meßpunkte zur Rekonstruktion von Verlauf und Lage zur Verfügung stehen. Triften, zum Beispiel durch eine Änderung der Maschinentemperatur, können dagegen rechnerisch eliminiert werden. Dies ist durch die Erfindung möglich oder zumindest erleichtert, da durch die unterschiedliche Länge der Bilderseiten die Rechnung mit weniger Unbekannten erfolgen kann. Sind die Daten der Kurve erfaßt, kann eine derartige Zuordnung der Bilderzeugungen zu Positionen der Bildzylinder vorgenommen werden, daß sowohl die Bildanfänge als auch die Bereiche der Teilfarbenbilder zu ihrer Sollage auf dem Träger bzw. auf einem auf letzterem befindlichen Drucksubstrat gelangen. Dabei kann die Zuordnung der Daten der Registermarken zu Positionen der bild- und substrattragenden Elemente als unmittelbare Positionszuordnung oder als mittelbare Positionszuordnung über erfaßte Zeiten erfolgen.

Eine Weiterbildung des Verfahrens sieht vor, daß die Daten der Registermarken zu Positionen der Bildzylinder und des Trägers in Bezug gesetzt und die Bilderzeugungseinrichtungen an den Bildzylindern zur Erzielung der Sollwerte auf dem Träger gesteuert werden. Bezüglich der Vorrichtung wird vorgeschlagen, daß die mindestens eine Einstellungseinrichtung derart ausgebildet ist, daß sie die Daten Registermarken zu Positionen der Bildzylinder und des Trägers in Bezug setzt und damit die Bilderzeugungseinrichtungen an den Bildzylindern zur Erzielung der Sollwerte auf dem Träger steuert. Diese Ausgestaltung ist vor allem für Mehrfarbendruckmaschinen, bei denen die Teilfarbenbilder unmittelbar von den Bildzylindern auf Drucksubstrate übertragen werden, die sich auf einem Träger befinden.

Ist eine Druckmaschine derart ausgestaltet, daß zwischen den Bildzylindern und dem Träger für Drucksubstrate Bildübertragungszylinder angeordnet sind, so wird zu der eben genannten Maßnahme zusätzlich vorgeschlagen, daß die Daten der Registermarken auch zu Positionen der Bildübertragungszylinder in Bezug gesetzt und in die Steuerung der Bilderzeugungseinrichtungen einbezogen werden. Bezüglich der Vorrichtung wird vorgeschlagen, daß die mindestens eine Einstellungseinrichtung derart ausgebildet ist, daß sie die Daten der Registermarken auch zu Positionen der Bildübertragungszylinder in Bezug setzt und in die Steuerung der Bilderzeugungseinrichtungen einbezieht. Diese Maßnahme ist insbesondere wichtig, weil für den erforderlichen Kontakt von Bildzylinder und Bildübertragungszylinder mindestens eine der Oberflächen eine gewisse Elastizität aufweisen kann. In der Regel wird vorgesehen, daß die Bildübertragungszylinder mit einem elastischen Mantel ausgestattet sind. Durch die Deformation einer derartigen elastischen Oberfläche bei zwei Zylindern, an deren Berührung eine Kraftübertragung stattfindet, kommt es zu einem Overdrive des einen Zylinders gegenüber dem anderen, da das Verhalten des elastischen Materials das Übersetzungsverhältnis beeinflußt. Um diese Tatsache, sowie eventuelle Unrundheiten oder sonstige Unregelmäßigkeiten des Bildübertragungszylinders zu eliminieren; ist es erforderlich, daß die Daten der Registermarken auch zu den Bildübertragungszylindern in Bezug gesetzt werden und bei der Steuerung der Bilderzeugungseinrichtungen als den Stellungen der Bildübertragungszylinder zugeordnete Korrekturwerte beachtet werden.

Zweckmäßigerweise ist das Verfahren derart ausgestaltet, daß getrennte Korrekturwerte für die Erzeugung der Bildanfänge und der Bereiche der Teilfarbenbilder ermittelt werden, wobei sich die Erzeugung der Bereiche an den Bildanfängen orientiert. Bezüglich der Vorrichtung ist die mindestens eine Einstellungseinrichtung in entsprechender Weise ausgebildet. Ist bei einer entsprechenden Steuerung ein Bildanfang exakt positioniert, so können sich daran die Bereiche der Teilfarbenbilder anschließen, wobei jeder Einzelbereich entsprechend den Korrekturwerten für die Bereiche der Teilfarbenbilder positioniert werden kann.

Die mindestens eine Bildseite mit Registermarken kann eine Überlänge aufweisen, wobei dann unter Umständen eine einzige Bildseite für die Ermittlung der Korrekturwerte ausreicht. Eine andere Möglichkeit besteht darin, daß mehrere gegenüber den Drucken, deren Register eingestellt werden soll, kürzere Bildseiten erstellt werden. Im erstgenannten Fall ist es zweckmäßig, wenn die Länge einer Bildseite derart gewählt wird, daß mehrere Perioden von Fehlern von Bereichen der Teilfarbenbilder erfaßt werden. Im zweiten Fall ist es zweckmäßig, wenn die kürzeren Bildseiten derart positioniert sind, daß in ihnen mehrere Perioden von Fehlern von Bildanfängen enthalten sind. Da die Fehler bezüglich der Bildanfänge sowie die Fehler bezüglich der Bereiche der Teilfarbenbilder in der Regel einen periodischen Verlauf aufweisen, können diese Perioden erfaßt werden, und es ist auf dies Weise ist leicht möglich, die Daten der Registermarken, also die erfaßten Istwerte nach Istwerten bezüglich der Bildanfänge und nach Istwerten bezüglich der Bereiche der Teilfarbenbilder aufzuschlüsseln und die Steuerung in der oben genannten Art und Weise durchzuführen. Bezüglich der Vorrichtung ist dann vorgesehen, daß die mindestens eine Einstellungseinrichtung zur Auswertung in den vorgenannten Art und Weisen ausgebildet ist.

Für das Verfahren wird vorgeschlagen, daß die Registermarken derart ausgebildet sind, daß sich aus ihnen die Ist-Lagen der Bildanfänge erfassen lassen und daß die Korrekturwerte aus einem Vergleich der Ist- mit den Sollagen ermittelt werden. Weiterhin wird vorgeschlagen, daß die Registermarken derart ausgebildet sind, daß sich aus ihnen die Ist-Lagen der Bereiche erfassen lassen und daß die Korrekturwerte aus einem Vergleich der Ist- mit den Sollagen bestimmt werden. Bezüglich der Vorrichtung wird vorgeschlagen, daß sie derart ausgebildet ist, daß sie aus den Daten der erfaßten Registermarken in vorgenannter Weise die Korrekturwerte ermittelt.

Bei den Bereichen der Teilfarbenbilder kann es sich um Bildpunktzeilen oder um Gruppen von Bildpunktzeilen handeln. Die Vorrichtung ist dann entsprechend zur Berechnung von Bereichen ausgebildet, die Bildpunktzeilen oder Gruppen von Bildpunktzeilen sein können.

Um die Bereiche zu Positionen von bild- und substrattragenden Elementen zuzuordnen, gibt es verschiedene Möglichkeiten. Einmal kann die Positionszuordnung mittelbar über eine Zeitzuordnung erfolgen, oder sie kann in direkter Weise als Positionszuordnung vorgenommen werden. Im letzteren Fall wird als besonders zweckmäßige Ausgestaltung vorgeschlagen, daß die Lage der Bereiche definierten Winkelstellungen der Bildzylinder zugeordnet werden. Bezüglich der Vorrichtung wird vorgeschlagen, daß sie mit mindestens einem Sensor für mindestens eine Positionserfassung ausgestattet und derart ausgebildet ist, daß sie die Lage der Bereiche definierten Winkelstellungen der Bildzylinder zuordnet. Besonders zweckmäßig ist es dabei, Winkelsequenzen der Bildzylinder fest zu definieren und diesen definierten Winkelsequenzen die Größen der Bereiche zuzuordnen. Für eine entsprechende Zuordnung wird auch die Vorrichtung ausgebildet. Diese Zuordnung zu definierten Winkelsequenzen der Bildzylinder ist eine einfache Methode, um unterschiedliche Übertragungen der Bereiche in unterschiedlichen Positionen der sie übertragenden Elemente bei der Erzeugung der Teilfarbenbilder derart zu eliminieren, daß nachher die Registergenauigkeit auf dem Drucksubstrat gewährleistet ist. Eine einfache Korrektur der Größe der Bereiche kann durch eine Änderung des Abstands der Bildpunktzeilen vorgenommen werden.

Weitere Möglichkeiten zur Ermittlung der Korrekturwerte für die Bildanfänge oder für die Bereiche der Teilfarbenbilder bestehen darin, daß die Lage der Bildanfänge der Lage bestimmter definiert beabstandeter Bereiche zugeordnet werden oder im anderen Fall, daß die Korrekturwerte für die Bereiche mittels der Istwerte der Lage vieler Bildanfänge bestimmt werden. Die Vorrichtung wird dann für eine entsprechende Zuordnung oder Bestimmung ausgebildet.

Vorzugsweise wird das Verfahren derart ausgestaltet, daß aus den Daten der Registermarken die getrennte Erfassung der Istwerte der Bildanfänge und der Istwerte der Bereiche der Teilfarbenbilder dadurch erfolgt, daß die durch die Erfassung der Registermarken gewonnenen Daten mittels entsprechender Algorithmen aufgrund ihrer unterschiedlichen Charakteristiken getrennt werden. Zu diesem Zweck wird vorgeschlagen, daß die Vorrichtung einen Rechner enthält, der mit Algorithmen geladen ist, durch die er durch die Erfassung der Registermarken gewonnenen Daten aufgrund der unterschiedlichen Charakteristiken der Istwerte der Bildanfänge und der Istwerte der Bereiche trennt. Gerade für diese Ausgestaltung bietet die erfindungsgemäße Maßnahme mit den zu den Drucken unterschiedlichen Längen der Bildseiten den Vorteil, daß die Berechnung mit vertretbarem Aufwand und schnell genug vorgenommen werden kann. Situationen, in denen eine derartige Trennung nicht möglich ist, sind durch die erfindungsgemäßen Maßnahmen ausgeschlossen.

Es kann vorgesehen sein, daß der Probedruck der mindestens einen Bildseite zur Durchführung einer Voreinstellung eines Registers vor der Bedruckung eines Drucksubstrats erfolgt und die Berechnung dazu dient, daß bereits das erste bedruckte Substrat voll registerhaltig ist. Dabei bietet die erfindungsgemäße Berechnung der Korrekturwerte den großen Vorteil, daß Maschinen derart ausgebildet sein können, daß auch unterschiedliche Einzelseiten voll registerhaltig bedruckbar sind. Dabei ist es zweckmäßig, wenn der Probedruck auf den Träger für Drucksubstrate gedruckt und nach der Auswertung wieder entfernt wird. Zu diesem Zweck wird die Vorrichtung mit einer Einrichtung zur Entfernung von Probedrucken von Bildseiten von dem Träger ausgestattet.

Selbstverständlich kann jedoch ein Probedruck für eine Registerregelung auch während der Bedruckung der Drucksubstrate erfolgen, wobei die Probedrucke beispielsweise auf nicht von Drucksubstraten bedeckte Flächen des Trägers für Drucksubstrate aufgebracht und nach der Auswertung wieder entfernt werden können. Diese Maßnahme hat beispielsweise den Vorteil, daß eine Triftkorrektur während des Drucks erfaßt und umgehend eine Gegensteuerung durch entsprechende Korrekturwerte vorgenommen werden kann.

Die Erfindung wird nachfolgend anhand der Zeichnung erläutert. Es zeigen
- **Fig. 1**: das Prinzip einer Mehrfarbendruckmaschine, deren Register erfindungsgemäß eingestellt werden kann,
- **Fig. 2**: ein Ausführungsbeispiel einer erfindungsgemäßen Registereinstellung und
- **Fig. 3**: ein Beispiel einer sich aus Messungen des Registersensors ergebenden Kurve von Abweichungen.

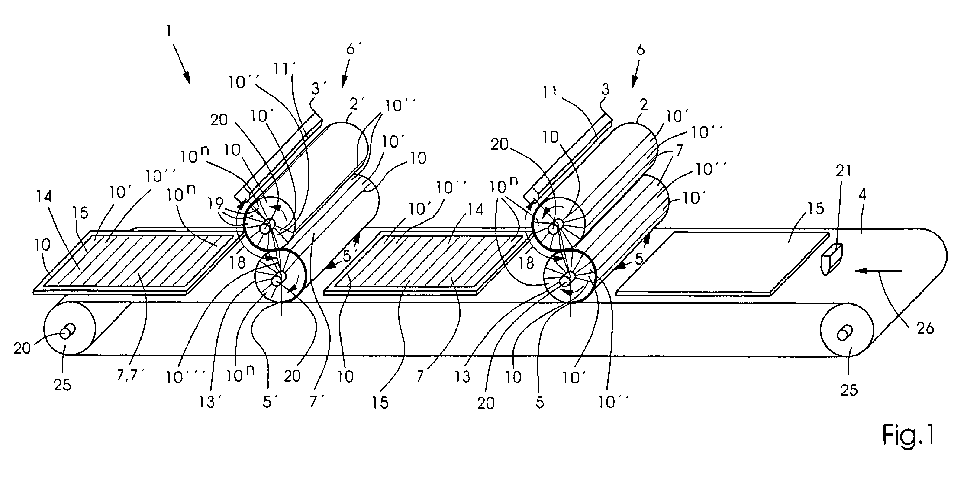

**Fig. 1** zeigt das Prinzip einer Mehrfarbendruckmaschine 1, deren Register erfindungsgemäß eingestellt werden kann. Eine derartige Mehrfarbendruckmaschine 1 besteht in der Regel aus vier und mehr Farbdruckwerken 6, 6', 6", 6"'. Zur Vereinfachung wurden lediglich zwei Farbdruckwerke 6 und 6' dargestellt. Diese Farbdruckwerke 6, 6' verfügen über Bildzylinder 2, 2', ... und über Bilderzeugungseinrichtungen 3, 3', ... zur Erzeugung von Teilfarbenbildern 7, 7', ..., beispielsweise von elektrostatischen latenten Bildern. Diese Teilfarbenbilder 7, 7', ... werden von den Bildzylinder 2, 2', ... auf Bildübertragungszylinder 13, 13', ... übertragen, um dann von diesen Bildübertragungszylindern 13, 13', ... auf Drucksubstrate 15 aufgebracht zu werden. Dabei bringt jedes Farbdruckwerk 6, 6', ... ein Teilfarbenbild 7, 7', ... auf, die zusammen den Farbdruck ergeben.

Die Drucke 14, deren Register eingestellt werden sollen, haben Bildanfänge 10 und sind in Bereiche 10', 10", ..., 10ⁿ unterteilt, wobei diese Einteilung für jedes Teilfarbenbild 7, 7' vorgenommen wird, um die Erzeugung der Bereiche 10, 10', 10", ..., 10ⁿ derart zu steuern, daß ein registergenaues Übereinanderdrucken sowohl der Bildanfänge 10 als auch der Bereiche 10', 10", ..., 10ⁿ erzielbar ist.

Um diese Registereinstellung zu erzielen, werden die Einrichtungen 3, 3', ... derart gesteuert, daß die Bilderzeugungsstellen 11, 11', ... die Bildanfänge 10 und die Bereiche 10', 10", ..., 10ⁿ in solchen Positionen der Bildzylinder 2, 2', ... plazieren, daß die Teilfarbenbilder 7, 7', ... bezüglich aller definierter Bereiche 10, 10', 10", ..., 10ⁿ aufeinander gedruckt werden. Um dies zu erreichen, sind Sensoren 20 für die Positionserfassung aller bild- und substrattragenden Elemente 2, 2', ..., 4, 13, 13', ... vorgesehen. Weiterhin ist ein Sensor 21 für die Erfassung von Drucksubstraten 15 vorgesehen, der eine entsprechende Meldung an die Einstellungseinrichtungen 22, 22', 22", 22'" gibt.

Die Drucksubstrate 15 werden in Richtung des Pfeils 26 von einem Träger 4 für Drucksubstrate 15 transportiert und an jedem Farbdruckwerk 6, 6' an einer Bildübertragungsstelle 5' mit einem Teilfarbenbild 7, 7', ... versehen. Den Bildübertragungsstellen 5, 5', ... gegenüberliegend, also an der anderen Seite des Trägers 4, befinden sich noch Gegendruckzylinder, die mechanisch und elektrostatisch die Übertragung der Teilfarbenbilder 7, 7', ... auf die Drucksubstrate 15 unterstützen. Diese Gegendruckzylinder sind der Einfachheit halber nicht dargestellt.

Die dargestellte Ausgestaltung der Erfindung schlägt vor, die definierten Bereiche 10, 10', 10", ..., 10ⁿ der Teilfarbenbilder 7, 7', ... definierten Winkelstellungen 18 der Bildzylinder 2, 2', ... derart zuzuordnen, daß jeder Bereich 10, 10', 10", ..., 10ⁿ einer definierten Winkelsequenz 19 des jeweiligen Bildzylinders 2, 2', ... zugeordnet ist. Dabei sind jedoch die definierten Winkelsequenzen 19 und die definierten Bereiche 10, 10', 10", ..., 10ⁿ wesentlich größer gezeichnet, als sie tatsächlich realisiert werden. Letztere wären so klein, daß sie sich in dieser Weise nicht zeichnerisch darstellen lassen; eine Unterteilung größter Feinheit ist für die Erzielung von Qualitätsdrucken notwendig.

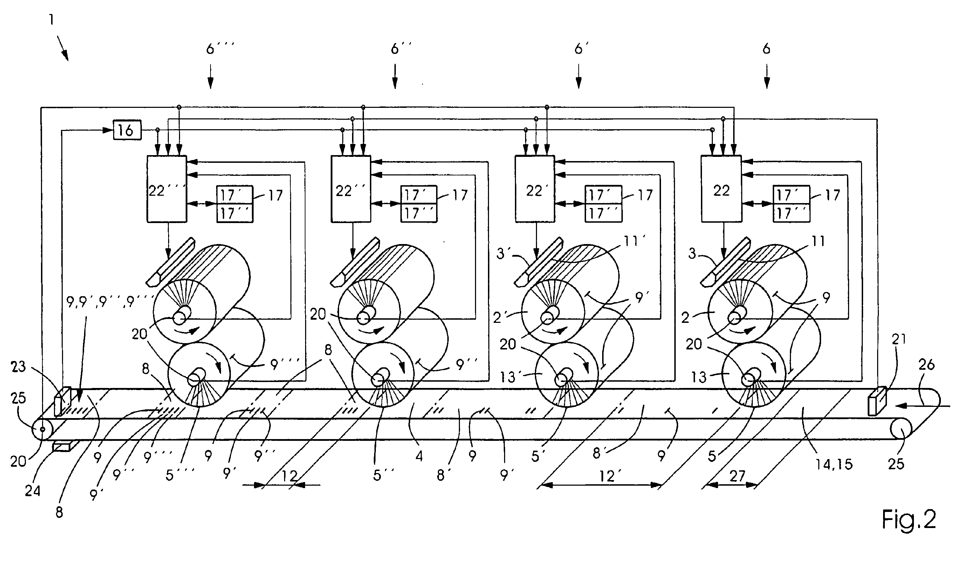

**Fig. 2** zeigt ein Ausführungsbeispiel einer Mehrfarbendruckmaschine 1 mit der Realisierung einer erfindungsgemäßen Registereinstellung. Dabei entsprechen Aufbau und Funktionsweise dem oben Beschriebenen. Bei dieser Mehrfarbendruckmaschine 1 ist jedem Farbdruckwerk 6, 6', 6", 6"' eine Einstellungseinrichtung 22, 22', 22", 22"' zugeordnet, die die Einrichtungen 3, 3', ... zur Erzeugung der Teilfarbenbilder 7, 7', ... derart steuert, daß die Bilderzeugungsstellen 11, 11', ... derart auf den Bildzylindern 2, 2', ... plaziert werden, daß die Teilfarbenbilder 7, 7', ... bei der Übertragung auf ein Drucksubstrat 15 registergenau übereinander gedruckt werden.

Zu diesem Zweck sieht die Erfindung vor, daß vor der Erstellung eines Drucks 14, dessen Register eingestellt wird, also bevor ein Drucksubstrat 15 durch die Maschine läuft, als Probedruck Bildseiten 8, 8' auf den Träger 4 für Drucksubstrate 15 gedruckt werden, die Registermarken 9, 9', 9", 9"' enthalten. Dabei sind die Bildseiten 8, 8' keine materiellen, sondern gedachte Seiten, ihre Begrenzungen sind daher strichpunktiert eingezeichnet. Jedes Druckwerk 6, 6', 6", 6'" druckt mindestens eine Registermarke 9, 9', 9", 9"' auf eine derartige Bildseite 8, 8', vorzugsweise jedoch eine größere Anzahl. So wird beispielsweise ein Registermarke 9 von der Einrichtung 3 zur Erzeugung des Teilfarbenbilds 7 auf dem Bildzylinder 2 erzeugt und dann mittels des Bildübertragungszylinders 13 auf den Träger 4 übertragen. In entsprechender Weise werden Registermarken 9', 9", 9"' durch die Farbdruckwerke 6', 6", 6"' erstellt. Diese Registermarken 9, 9', 9", 9'" werden mittels eines Registersensors 23 erfaßt, und die Daten 16 der Registermarken 9, 9', 9", 9'" an die Einstellungseinrichtungen 22, 22', 22", 22"' gegeben. Für eine entsprechende Auswertung und Steuerung sind weiterhin Sensoren 20 für die Positionserfassungen vorgesehen. Zweckmäßigerweise handelt es sich dabei um Winkelstellungsgeber, die allen bild- und substrattragenden Elementen 2, 2', ..., 4, 13, 13', zugeordnet sind.

Ein Problem bei der Erfassung der Daten 16 der Registermarken 9, 9', 9", 9'" durch den Registersensor 23 besteht darin, daß in die gemessenen Daten 16 der Registermarken 9, 9', 9", 9'" zwei verschiedene Fehler eingehen, nämlich die Fehler bezüglich der Bildanfänge 10 und die Fehler bezüglich der definierten Bereiche 10', 10", ..., 10ⁿ der Teilfarbenbilder 7, 7', .... Da Fehler bezüglich der Bildanfänge 10 jedoch Zuordnungsfehler der Bilderzeugungsstellen 11, 11', ... der einzelnen Farbdruckwerke 6, 6', 6", 6'" sind und die Fehler der Bereiche 10', 10", ..., 10ⁿ der Teilfarbenbilder 7, 7', ... Übertragungsfehler bezüglich der Übertragung der Teilfarbenbilder 7, 7', ... von den Bildzylindern 2, 2', ... bis zu den Bildübertragungsstellen 5, 5', 5", 5"' auf die Drucksubstrate 15, erfordern beide Fehler verschiedene Korrekturen.

Zwar werden von den Einstellungseinrichtungen 22, 22', 22", 22"' aufgrund der Daten 16 der Registermarken 9, 9', 9", 9"' jeweils die entsprechenden, als Stellbefehle möglicherweise zusammengefaßten Korrekturwerte 17 für die Bilderzeugungsstellen 11, 11', ... erstellt, jedoch setzen sich auch diese Korrekturwerte 17 aus Korrekturwerten 17' für die Bildanfänge 10 und aus Korrekturwerten 17" für die Bereiche 10', 10", ..., 10ⁿ der Teilfarbenbilder 7, 7', ... zusammen. Dabei wird für jedes Teilfarbenbild 7, 7', ... zuerst der Bildanfang 10 korrigiert und nachfolgend erfolgen die Korrekturen für die Bereiche 10', 10", ..., 10ⁿ. Daher muß vor Ermittlung der Korrekturwerte 17 eine Auswertung der Daten 16 der Registermarken 9, 9', 9", 9"' erfolgen, derart, daß zumindest rechnerisch Korrekturwerte 17' für die Bildanfänge 10 und Korrekturwerte 17" für die Bereiche 10', 10", ..., 10ⁿ vorliegen. Erst danach werden die Korrekturwerte 17' und 17" wieder zu entsprechenden Stellsignalen für die Bilderzeugungseinrichtungen 3, 3', ... zusammengefügt.

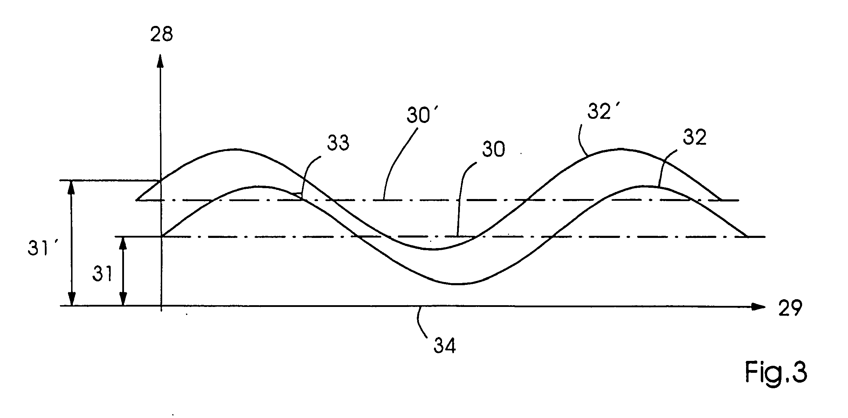

Der Erläuterung des hier zu lösenden Problems dient die Darstellung der **Fig. 3**, die ein Beispiel von sich aus Messungen des Registersensors 23 ergebenden Kurven 32, 32' von Abweichungen von Meßpunkten 33 von der Sollage 34 darstellt. In dem dargestellten Diagramm sind die Abweichungen 28 von der Sollage 34 gegen die Zeit 29 oder vorzugsweise die Positionen 29 des Trägers 4 aufgezeichnet. Dabei können die Positionen 29 mittels eines Winkelstellungsgebers 20 erfaßt werden, der einer Rolle 25, vorzugsweise der Antriebsrolle des Trägers 4, zugeordnet ist.

Die sich aus vielen Meßpunkten 33 ergebenden Kurven 32, 32' weisen an ihrem Beginn meistens einen Offset 31, 31', also einen Achsabschnitt ungleich Null auf. Dies sind jeweils die Fehler für die Bildanfänge 10 von Teilfarbenbildern 7, 7', .... Danach beschreiben die Kurven 32, 32' in periodischer Weise die Abweichungen der Bereiche 10', 10", .... 10ⁿ eines der Teilfarbenbilder 7, 7', .... Der mittlere Wert 30, 30' einer Kurve 32, 32' kann wie dargestellt verlaufen, es ist jedoch auch eine Trift möglich, die sich durch ein Ansteigen oder Abfallen des mittleren Werts 30, 30' bemerkbar macht. Auch der Offset 31, 31' bezüglich mehrerer Bildanfänge 10 ergibt in der Regel eine ähnliche periodisch verlaufende Kurve, die dann erfaßt wird, um auch die Bildanfänge 10 zu korrigieren.

Für die Registereinstellung ist eine Analyse einer derartigen Kurve 32, 32' erforderlich, um die Fehler der Bildanfänge 10, also den Offset 31, 31' zu korrigieren, um dann die Fehler der Bereiche 10', 10", ..., 10ⁿ und gegebenenfalls auch eine auftretende Trift zu korrigieren. Die Lösung dieses Problems läuft bei der Berechnung darauf hinaus, daß Gleichungen mit mehreren Unbekannten aufzulösen sind. Um die Daten 16 mit vertretbarem Aufwand zu bearbeiten, muß die Anzahl der Unbekannten reduziert werden, was dadurch möglich ist, daß die Registermarken 9, 9', 9", 9'" zu Bildseiten 8, 8' zusammengefaßt werden, die eine andere Länge 12, 12' aufweisen als die Länge 27 der Drucke 14, deren Register eingestellt werden soll. Es gibt dabei einerseits die Möglichkeit, eine lange Bildseite 8' zu erzeugen, die eine Vielzahl von Registermarken 9, 9', 9", 9'" enthält. Es können jedoch auch viele kurze Bildseiten 8 erzeugt werden, die in vorgegebener Weise zueinander positioniert sind. Auf diese Weise errechnen die Einstellungseinrichtungen 22, 22', 22", 22"' die Korrekturwerte 17, 17', 17" für die jeweiligen Bilderzeugungen durch die Bilderzeugungseinrichtungen 3, 3', .... Die entsprechenden Steuerungsbefehle sind durch die Pfeile von den Einstellungseinrichtungen 22, 22', 22", 22'" zu den Einrichtungen 3, 3', ... dargestellt. Dabei sind die Korrekturwerte 17, 17', 17" zweckmäßigerweise definierten Winkelstellungen 18 der Bildzylinder 2, 2', ... zugeordnet. Die Zuordnung kann, wie bereits erwähnt, dadurch erfolgen, daß die Bereiche 10', 10", ..., 10ⁿ definierten Winkelsequenzen 19 der Bildzylinder 2, 2", ... zugeordnet werden.

Für die Auswertung der Daten 16 und die entsprechende Steuerung der Bilderzeugungseinrichtungen 3, 3', ... sind die Einstellungseinrichtungen 22, 22', 22", 22'" mit Sensoren 20 für die Positionserfassungen der Bildzylinder 2, 2', ..., der Bildübertragungszylinder 13, 13', und des Trägers 4 verbunden. Weiterhin erhalten sie von einem Sensor 21 ein Signal, wenn ein Drucksubstrat 15 diesen Sensor 21 passiert. Entsprechend wird dann das Startsignal für die Erzeugung der jeweiligen Teilfarbenbilder 7, 7', ... gegeben.

Das dargestellte Ausführungsbeispiel ist selbstverständlich nur beispielhaft, auf diese Weise können auch Druckmaschinen gesteuert werden, bei denen die Teilfarbenbilder 7, 7', ... unmittelbar von den Bildzylindern 2, 2', ... auf die Drucksubstrate 15 übertragen werden. Auch kann die Steuerung etwas anders ausgestaltet sein, beispielsweise können statt der Einstellungseinrichtungen 22, 22', 22", 22"', die jeweils einem Druckwerk 6, 6', 6", 6'" zugeordnet sind, eine gemeinsame Steuerung für alle Druckwerke vorgesehen sein.

### Bezugszeichenliste

- 1: Mehrfarbendruckmaschine
- 2, 2', ...: Bildzylinder
- 3, 3', ...: Bilderzeugungseinrichtungen zur Erzeugung von Teilfarbenbildern, beispielsweise von elektrostatischen latenten Bildern
- 4: Träger für Drucksubstrate
- 5, 5', 5", 5'": Bildübertragungsstellen
- 6, 6', 6", 6'": Farbdruckwerke
- 7, 7': Teilfarbenbilder
- 8, 8': Bildseiten
- 8: kurze Bildseiten
- 8': lange Bildseiten
- 9, 9', 9", 9'": Registermarken (verschiedener Farbdruckwerke)
- 10, 10', 10", ..., 10ⁿ: definierte Bereiche der Teilfarbenbilder
- 10: Bildanfänge / Beginn der Bebilderung
- 10', 10", ..., 10ⁿ: Bereiche der Teilfarbenbilder, in welche die Bildfläche unterteilt ist
- 11, 11', ...: Bilderzeugungsstellen
- 12, 12': Länge einer Bildseite
- 12: kürzere Länge
- 12': Überlänge
- 13, 13': Bildübertragungszylinder
- 14: Drucke, deren Register eingestellt werden soll
- 15: Drucksubstrate
- 16: Daten der Registermarken
- 17, 17', 17": Korrekturwert
- 17': Korrekturwerte für die Bildanfänge
- 17": Korrekturwerte für die Bereiche der Teilfarbenbilder
- 18: definierte Winkelstellungen der Bildzylinder
- 19: definierte Winkelsequenzen
- 20: Sensoren für Positionserfassungen (Winkelstellungsgeber)
- 21: Sensor für die Erfassung von Drucksubstraten
- 22, 22' 22", 22'": Einstellungseinrichtungen
- 23: Registersensor
- 24: Einrichtung zur Entfernung von Probedrucken vom Träger
- 25: Rollen für Antrieb und Führung des Trägers
- 26: Pfeil: Transportrichtung der Drucksubstrate
- 27: Länge eines Drucks
- 28: Abweichung von der Solllage
- 29: Zeit oder Position des Trägers
- 30, 30': mittlerer Wert
- 31, 31': Offset
- 32, 32': Kurve, die die Abweichungen der Meßpunkte von der Solllage angibt
- 33: Meßpunkt
- 34: Solllage

## Patentansprüche

1. Verfahren zur Registereinstellung an einer Mehrfarbendruckmaschine (1) mit verschiedenen Druckfarben zugeordneten Farbdruckwerken (6, 6', 6", 6"'), die jeweils einen Bildzylinder (2, 2', ...), eine Bilderzeugungseinrichtung (3, 3', ...) zur Erzeugung von elektrostatischen latenten Teilfarbenbildern (7, 7', ...) auf dem Bildzylinder (2, 2', ...) und eine Bildübertragungsstelle (5, 5', 5", 5'") für die Übertragung der Teilfarbenbilder (7, 7', ...) auf Drucksubstrate (15) umfassen, und mit einem Träger (4) für die Drucksubstrate (15), wobei eine Zuordnung der Bilderzeugungsstellen (11, 11', ...) auf dem jeweiligen Bildzylinder (2, 2', ...) zur Erzielung einer Registerübereinstimmung der Teilfarbenbilder (7, 7', ...) beim Druck vorgenommen wird, indem sowohl die Erzeugung der Bildanfänge (10) als auch die Erzeugung von Bereichen (10', 10", ... 10ⁿ) der Teilfarbenbilder (7, 7', ...) auf der Grundlage des Drucks und der Auswertung von Registermarken (9, 9', 9", 9"') eingestellt wird, indem zur Ermittlung von Korrekturwerten (17, 17', 17", 17"') Daten (16) der Registermarken (9, 9', 9", 9"') von mindestens einer Bildseite (8, 8',...) erfasst, zu Positionen von bild- und substrattragenden Elementen (2, 2', ..., 4, 13, 13', ...) in Bezug gesetzt und die Bilderzeugungseinrichtungen (3, 3', ...) entsprechend der Korrekturwerte (17, 17', 17") gesteuert werden,
**dadurch gekennzeichnet,**
**dass** mindestens eine Bildseite (8, 8') mit Registermarken (9, 9', 9", 9'") gedruckt wird, die eine andere Länge (12, 12') aufweist als die Drucke (14), deren Register eingestellt werden soll, um getrennte Korrekturwerte (17', 17") für die Erzeugung der Bildanfänge (10) und der Bereiche (10', 10", ..., 10ⁿ) der Teilfarbenbilder (7, 7, ...) zu ermitteln, wobei sich die Erzeugung der Bereiche (10', 10", ...10ⁿ) an den Bildanfängen (10) orientiert und wozu Probedrucke auf nicht von Drucksubstraten (15) bedeckte Flächen des Trägers (4) für Drucksubstrate (15) aufgebracht und nach der Auswertung wieder entfernt werden.

2. Verfahren nach Anspruch 1,
**dadurch gekennzeichnet,**
**dass** die Daten (16) der Registermarken (9, 9', 9", 9"') zu Positionen der Bildzylinder (2, 2', ...) und des Trägers (4) in Bezug gesetzt und die Bilderzeugungseinrichtungen (3, 3', ...) an den Bildzylindern (2, 2', ...) zur Erzielung der Sollwerte auf dem Träger (4) gesteuert werden.

3. Verfahren nach Anspruch 2,
**dadurch gekennzeichnet,**
**dass** die Daten (16) der Registermarken (9, 9', 9", 9"') auch zu Positionen von Bildübertragungszylindern (13, 13', ...) der Farbdruckwerke (6, 6' 6", 6"') in Bezug gesetzt und in die Steuerung der Bilderzeugungseinrichtungen (3, 3', ...) einbezogen werden.

4. Verfahren nach einem der Ansprüche 1 bis 3,
**dadurch gekennzeichnet,**
**dass** die mindestens eine Bildseite (8') gegenüber den Drucken (14) eine Überlänge (12') aufweist.

5. Verfahren nach einem der Ansprüche 1 bis 3,
**dadurch gekennzeichnet,**
**dass** mehrere gegenüber den Drucken (14) kürzere (12') Bildseiten (8) erstellt werden.

6. Verfahren nach einem der Anspruch 4,
**dadurch gekennzeichnet,**
**dass** die Länge (12') einer Bildseite (8') derart gewählt wird, dass mehrere Perioden von Fehlern von Bereichen (10, 10', ..., 10ⁿ) von Teilfarbenbildern (7, 7', ...) erfasst werden können.

7. Verfahren nach Anspruch 5,
**dadurch gekennzeichnet,**
**dass** die kürzeren (12) Bildseiten (8) derart positioniert sind, dass in ihnen mehrere Perioden von Fehlern von Bildanfängen (10) enthalten sind.

8. Verfahren nach einem der Ansprüche 1 bis 7,
**dadurch gekennzeichnet,**
**dass** die Registermarken (9, 9', 9", 9'") derart ausgebildet sind, dass sich aus ihnen die Ist-Lagen der Bildanfänge (10) erfassen lassen und dass die Korrekturwerte (17, 17', 17") aus einem Vergleich der Ist- mit den Solllagen ermittelt werden.

9. Verfahren nach einem der Ansprüche 1 bis 8,
**dadurch gekennzeichnet,**
**dass** die Registermarken (9, 9', 9", 9'") derart ausgebildet sind, dass sich aus ihnen die Ist-Lagen der Bereiche (10', 10", ...10ⁿ) erfassen lassen und dass die Korrekturwerte (17, 17', 17") aus einem Vergleich der Ist- mit den Solllagen bestimmt werden.

10. Verfahren nach Anspruch 9,
**dadurch gekennzeichnet,**
**dass** die Bereiche (10', 10", ..., 10ⁿ) Bildpunktzeilen sind.

11. Verfahren nach Anspruch 9,
**dadurch gekennzeichnet,**
**dass** die Bereiche (10', 10", ..., 10ⁿ) Gruppen von Bildpunktzeilen sind.

12. Verfahren nach einem der Ansprüche 1 bis 11,
**dadurch gekennzeichnet,**
**dass** die Lage der Bereiche (10', 10", ..., 10ⁿ) definierten Winkelstellungen (18) der Bildzylinder (2, 2', ...) zugeordnet werden.

13. Verfahren nach Anspruch 11 oder 12,
**dadurch gekennzeichnet,**
**dass** die Größe der Bereiche (10', 10", ..., 10ⁿ) definierten Winkelsequenzen (19) der Bildzylinder (2, 2', ...) zugeordnet werden.

14. Verfahren nach einem der Ansprüche 11 bis 13,
**dadurch gekennzeichnet,**
**dass** bei einer Korrektur der Größe der Bereiche (10', 10", ..., 10ⁿ) eine Änderung des Abstands der Bildpunktzeilen vorgenommen wird.

15. Verfahren nach einem der Ansprüche 1 bis 14,
**dadurch gekennzeichnet,**
**dass** die Korrekturwerte für die Bildanfänge (10) mittels der Istwerte für die Bereiche (10', 10", ..., 10ⁿ) bestimmt werden.

16. Verfahren nach Anspruch 15,
**dadurch gekennzeichnet,**
**dass** die Lage der Bildanfänge (10) der Lage bestimmter, definiert beabstandeter Bereiche zugeordnet werden.

17. Verfahren nach einem der Ansprüche 1 bis 14,
**dadurch gekennzeichnet,**
**dass** die Korrekturwerte (17, 17', 17") für die Bereiche (10', 10", ..., 10ⁿ) mittels der Istwerte der Lage vieler Bildanfänge (10) bestimmt werden.

18. Verfahren nach einem der Ansprüche 1 bis 17,
**dadurch gekennzeichnet,**
**dass** aus den Daten (16) der Registermarken (9, 9', 9", 9"') die getrennte Erfassung der Istwerte der Bildanfänge (10) und der Istwerte der Bereiche (10', 10", ..., 10ⁿ) **dadurch** erfolgt, dass die durch die Erfassung der Registermarken (9, 9', 9", 9'") gewonnenen Daten (16) mittels entsprechender Algorithmen aufgrund ihrer unterschiedlichen Charakteristiken getrennt werden.

19. Verfahren nach einem der Ansprüche 1 bis 18,
**dadurch gekennzeichnet,**
**dass** ein Probedruck der mindestens einen Bildseite (8, 8') zur Durchführung einer Voreinstellung des Registers vor der Bedruckung eines Drucksubstrats (15) erfolgt.

20. Verfahren nach einem der Ansprüche 1 bis 19,
**dadurch gekennzeichnet,**
**dass** Probedrucke für eine Registerregelung während der Bedruckung der Drucksubstrate (15) erfolgen.

## Claims

1. Method for adjusting the register of a multi-color printing machine (1) having color printing units associated with different printing inks (6, 6', 6", 6"'), each of said color printing units comprising an image cylinder (2, 2', ..), an image-generating device (3, 3', ...) for generating electrostatic latent color separation images (7, 7', ...) on the image cylinder (2, 2', ...), and an image transfer site (5, 5', 5", 5"') for transferring the color separation images (7, 7', ...) to printing substrates (15), and having a carrier (4) for the printing substrates (15), with an allocation of the image-generating sites (11, 11', ...) to the respective cylinder (2, 2', ...) in order to achieve registration-perfect color separation images (7, 7', ...) being performed during the printing operation in that both the generation of the image starts (10) and the generation of areas (10', 10", ... 10ⁿ) of the color separation images (7, 7', ...) are adjusted based on the print and on the evaluation of the register marks (9, 9', 9", 9"'), in that, for the determination of the correction values (17, 17', 17", 17"'), data (16) of the register marks (9, 9', 9", 9"') of at least one image side (8, 8', ...) are detected and related to the positions of image-carrying and substrate-carrying elements (2, 2', ..., 4, 13, 13', ...), and the image-generating devices (3, 3', ...) are controlled corresponding to the correction values (17, 17', 17"),
**characterized in that**
at least one image side (8, 8') with register marks (9. 9', 9", 9"') is printed, said image side having a length (12, 12') different from the length of the prints (14) whose register is to be adjusted in order to determine separate correction values (17', 17") for the generation of the image starts (10) and the areas (10', 10", ..., 10ⁿ) of the color separation images (7, 7', ...), with the generation of the areas (10', 10", ..., 10ⁿ) orienting itself to the image starts (10) and with test prints being applied to areas of the carrier (4) for printing substrates (15) that are not covered by printing substrates (15) and are again removed following the evaluation.

2. Method as in Claim 1,
**characterized in that**
the data (16) of the register marks (9, 9', 9", 9"') are related to positions of the image cylinders (2, 2', ...) and the carrier (4), and that the image-generating devices (3, 3', ...) on the image cylinders (2, 2', ...) are controlled to achieve the desired values on the carrier (4).

3. Method as in Claim 2,
**characterized in that**
the data (16) of the register marks (9, 9", 9"', 9"') are also related to po sitio ns of image-transfer cylinders (13, 13", ...) of the color printing units (6, 6', 6", 6"') and taken into consideration in the control of the image-generating devices (3, 3', ...).

4. Method as in one of Claims 1 through 3,
**characterized in that**
the at least one image side (8') has an excess length (12') relative to the prints (14).

5. Method as in one of Claims 1 through 3,
**characterized in that**
several image sides (8) being shorter (12') relative to the prints (14) are prepared.

6. Method as in Claim 4,
**characterized in that**
the length (12') of an image side (8') is selected in such a manner that several periods of errors of areas (10, 10', ..., 10ⁿ) of color separation images (7, 7', ...) can be detected.

7. Method as in Claim 5,
**characterized in that**
the shorter (12) image sides (8) are positioned in such a manner that they include several periods of errors of image starts (10).

8. Method as in one of Claims 1 through 7,
**characterized in that**
the register marks (9, 9', 9", 9"') arc configured in such a manner that the actual positions of the image starts (10) can be detected therewith, and that the correction values (17, 17', 17") are determined based on a comparison of the actual with the desired positions.

9. Method as in one of Claims 1 through 8,
**characterized in that**
the register marks (9, 9', 9", 9"') are configured in such a manner that the actual positions of the areas (10', 10", ..., 10ⁿ) can be detected therewith, and that the correction values (17, 17', 17") are determined based on a comparison of the actual with the desired positions.

10. Method as in Claim 9,
**characterized in that**
the areas (10', 10", ..., 10ⁿ) are image dot lines.

11. Method as in Claim 9,
**characterized in that**
the areas (10', 10", ..., 10ⁿ) are groups of image dot lines.

12. Method as in one of Claims 1 through 11,
**characterized in that**
the position of the areas (10', 10", ..., 10ⁿ) is associated with defined angular positions (18) of the image cylinders (2, 2', ...).

13. Method as in Claim 11 or 12,
**characterized in that**
the size of the areas (10', 10", ..., 10ⁿ) is associated with defined angular sequences (19) of the image cylinders (2, 2', ...).

14. Method as in one of the Claims 11 through 13,
**characterized in that,**
when the size of the areas (10', 10", ..., 10ⁿ) is corrected, the distance of the image dot lines is changed.

15. Method as in one of Claims 1 through 14,
**characterized in that**
the correction values for the image starts (10) are determined by means of the actual values of the areas (10', 10", ..., 10ⁿ).

16. Method as in Claim 15,
**characterized in that**
the position of the image starts (10) is associated with the position of specific areas at defined distances.

17. Method as in one of Claims 1 through 14,
**characterized in that**
the correction values (17, 17', 17") for the areas (10', 10", ..., 10ⁿ) are determined by means of the actual values of the position of many image starts (10).

18. Method as in one of Claims 1 through 17,
**characterized in that,**
based on the data (16) of the register marks (9, 9', 9", 9"'), the separate detection of the actual values of the image starts (10) and of the actual values of the areas (10', 10", ..., 10ⁿ) is performed **in that** data (16) yielded by the detection of the register marks (9, 9', 9", 9"') are separated based on their different characteristics by means of appropriate algorithms.

19. Method as in one of Claims 1 through 18,
**characterized in that**
a test print of the at least one image side (8, 8') is prepared for presetting the register before printing a printing substrate (15).

20. Method as in one of Claims 1 through 19,
**characterized in that**
test prints are prepared for a regulation of the register while the printing substrates (15) are being printed.

## Revendications

1. Procédé de mise en repérage pour une presse multicolore (1) avec des groupes d'impression en couleur (6, 6', 6", 6"') associés aux différentes couleurs d'impression comprenant chacun un cylindre d'image (2, 2', ...), un dispositif formateur d'image (3, 3', ...) permettant de générer des images partielles latentes en couleur électrostatiques (7, 7', ...) sur le cylindre d'image (2, 2', ...) et un poste de transmission d'image (5, 5', 5", 5"') pour la transmission des images partielles en couleur (7, 7', ...) sur des substrats d'impression (15), ainsi qu'un support (4) pour les substrats d'impression (15), une attribution des postes formateurs d'image (11, 11', ...) sur le cylindre d'image (2, 2', ...) correspondant étant effectuée pendant l'impression pour produire une harmonisation de repérage des images partielles en couleur (7, 7', ...) par le réglage de la génération des débuts d'image (10), d'une part, et de la génération de plages (10', 10", ..., 10n) des images partielles en couleur (7, 7', ...) sur la base de l'impression et de l'évaluation des repères (9, 9', 9", 9'"), en saisissant, pour déterminer les valeurs de correction (17, 17', 17", 17'"), des données (16) des repères (9, 9',9", 9"') d'au moins une page d'image (8, 8', ...), en mettant ces données en rapport avec les positions des éléments supportant les images et les substrats (2, 2", ..., 4, 13, 13', ...) et en gérant les dispositifs formateurs d'image (3, 3', ...) en fonction des valeurs de correction (17, 17', 17"), **caractérisé en ce qu'**au moins une page d'image (8, 8') est imprimée avec des repères (9, 9', 9", 9"') présentant une autre longueur (12, 12') que les impressions (14) qui doivent être mises en repérage pour déterminer des valeurs de corrections (17, 17") séparées pour la génération des débuts d'image (10) et des plages (10', 10", ..., 10n) des images partielles en couleur (7, 7', ...), la génération des plages (10', 10", ..., 10n) s'orientant aux débuts d'mage (10) et des images d'essai étant imprimées sur des zones du support (4) non recouvertes par des substrats d'impression (15) et supprimées après l'évaluation.

2. Procédé selon la revendication 1, **caractérisé en ce que** les données (16) des repères (9, 9', 9", 9'") sont mises en rapport avec les positions des cylindres d'image (2, 2', ...) et du support (4) et **en ce que** les dispositifs formateurs d'image (3, 3', ...) sur les cylindres d'image (2, 2', ...) sont gérés pour obtenir les valeurs nominales sur le support (4).

3. Procédé selon la revendication 2, **caractérisé en ce que** les données (16) des repères (9, 9', 9", 9'") sont également mises en rapport avec les positions des cylindres de transmission d'image (13, 13', ...) des groupes d'impression en couleur (6, 6', 6", 6'") et intégrées dans la gestion des dispositifs formateurs d'image (3, 3', ...).

4. Procédé selon l'une quelconque des revendications 1 à 3, **caractérisé en ce qu'**au moins une page d'image (8') présente une sur-longueur (12') par rapport aux impressions (14).

5. Procédé selon l'une quelconque des revendications 1 à 3, **caractérisé en ce que** plusieurs pages d'image (8) plus courtes (12') par rapport aux impressions (14) sont produites.

6. Procédé selon la revendication 4, **caractérisé en ce que** la longueur (12') d'une page d'image (8') est choisie de façon à pouvoir saisir plusieurs périodes d'erreurs de plages (10, 10', ... 10n) d'images partielles en couleur (7, 7', ...).

7. Procédé selon la revendication 5, **caractérisé en ce que** les pages d image (8') plus courtes (12) sont positionnées de façon à comprendre plusieurs périodes d'erreurs de débuts d'image (10).

8. Procédé selon l'une quelconque des revendications 1 à 7, **caractérisé en ce que** les repères (9, 9', 9 ", 9 "') sont réalisés de façon à permettre la saisie des positions réelles des débuts d'image (10) et à déterminer les valeurs de correction (17, 17', 17") à partir d'une comparaison entre les positions réelles et les positions nominales.

9. Procédé selon l'une quelconque des revendications 1 à 8, **caractérisé en ce que** les repères (9, 9', 9", 9'") sont réalisés de façon à permettre la saisie des positions réelles des plages (10', 10", ..., 10n) et à déterminer les valeurs de correction (17, 17', 17") à partir d'une comparaison entre les positions réelles et les positions nominales.

10. Procédé selon la revendication 9, **caractérisé en ce que** les plages (10', 10", ... 10n) sont des lignes de points d'image.

11. Procédé selon la revendication 9, **caractérisé en ce que** les plages (10', 10", ..., 10n) sont des groupes de lignes de points d'image.

12. Procédé selon l'une quelconque des revendications 1 à 11, **caractérisé en ce que** la position des plages (10', 10", ..., 10n) est associée à des positions annulaires (18) préalablement définies des cylindres d'image (2, 2', ...).

13. Procédé selon la revendication 11 ou 12, **caractérise en ce que** la taille des plages (10', 10", ..., 10n) est attribuée à des séquences angulaires (19) préalablement définies des cylindres d'image (2, 2', ...).

14. Procédé selon l'une quelconque des revendications 11 à 13, **caractérisé en ce qu'**une modification de la distancé entre les lignes de points d'image est effectuée lors d'une correction de la taille des plages (10', 10", ..., 10n).

15. Procédé selon l'une quelconque des revendications 1 à 14, **caractérisé en ce que** les valeurs de correction pour les débuts d'image (10) sont déterminées par les valeurs réelles pour les plages (10', 10"...., 10n).

16. Procédé selon la revendication 15, **caractérisé en ce que** la position des débuts d'image (10) est associée à la position de certaines plages se trouvant à des distances préalablement définies entre elles.

17. Procède selon l'une quelconque des revendications 1 à 14, **caractérisé en ce que** les valeurs de correction (17, 17', 17") pour les plages (10', 10", ..., 10n) sont déterminées par les valeurs réelles de la position d'un grand nombre de débuts d'image (10).

18. Procédé selon l'une quelconque des revendications 1 à 17, **caractérisé en ce que** la saisie séparée des valeurs réelles des débuts d'image (10) et des valeurs réelles des plages (10', 10", ..., 10n) à partir des données (16) des repères (9, 9', 9", 9'") est effectuée par le fait que les données (16) obtenues par la saisie des repères (9, 9", 9"'. 9"') sont séparées par des algorithmes correspondantes en fonction de leurs différentes caractéristiques.

19. Procédé selon l'une quelconque des revendications 1 à 18, **caractérisé en ce que** l'on imprime une image d'essai d'au moins une page d'image (8, 8') pour une mise en repérage préalable de la machine avant de procéder à l'impression d'un substrat d'impression (15).

20. Procédé selon l'une quelconque des revendications 1 à 19, **caractérise en ce que** l'on imprime des images d'essai pour la mise en repérage pendant l'impression des substrats d'impression (15).
